# EUROPEAN PATENT SPECIFICATION

(11) **EP 0 478 200 B1**
(45) Date of publication and mention of the grant of the patent: **08.11.1995**
(21) Application number: 91308428.1
(22) Date of filing: 16.09.1991
(51) Int. Cl.: G11B 7/09

(54) **Optical disk drive apparatus**
Optische Platteneinheit
Unité de disque optique

(30) Priority: 27.09.1990 JP 255467/90
(43) Date of publication of application: 01.04.1992
(73) Proprietor: International Business Machines Corporation, Armonk, N.Y. 10504 (US)
(72) Inventor: Kagami, Naoyuki, Endoh, Fujisawa-shi, Kanagawa-ken (JP); Kubo, Hiroaki, Atsugi-shi, Kanagawa-ken (JP); Okada, Keiichi, Seya-ku, Yokohama-shi, Kanagawa-ken (JP)
(74) Representative: Burt, Roger James, Dr.

(56) References cited:
- PATENT ABSTRACTS OF JAPAN vol. 007, no. 032 (P-174) 08 February 1983, & JP-A- 57 186239
- PATENT ABSTRACTS OF JAPAN vol. 014, no. 072 (P-1004) 09 February 1990, & JP-A- 01 290130
- PATENT ABSTRACTS OF JAPAN vol. 007, no. 241 (P-232) 26 October 1983, & JP-A-58 128031
- PATENT ABSTRACTS OF JAPAN vol. 010, no. 143 (P-459) 27 May 1986, & JP-A- 60 261035

## Description

This invention relates to optical disk drive apparatus, and more particularly, to an apparatus used for controlling the focusing servo of an optical disk drive apparatus.

In order to optically record data on the recording surface of an optical disk and recover the recorded data, it is necessary to maintain a spot of a laser beam focused onto the recording surface under focusing servo control. During a seek operation in which the laser beam moves across tracks of the optical disk, the positions of the laser beam are controlled based on a Tracking Error Signal (TES). In order to obtain a proper TES, it is necessary to keep a spot of the laser beam focused onto the recording surface.

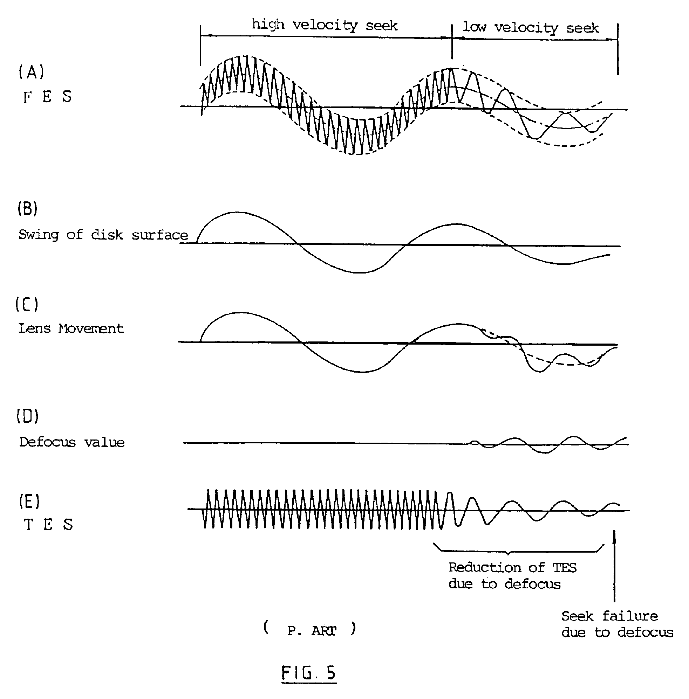

FIG.5(A) shows a waveform of a Focus Error Signal (FES) obtained under the condition that the gain of a focus servo loop does not change during a seek operation. The scattering of a laser beam due to a track groove affects the FES when the laser beam crosses a track, and as a result the FES takes the shape of a high-frequency signal during a period of high seek velocity, and the shape of a low-frequency signal during a period of low seek velocity. A high-frequency FES does not cause a problem even though the high-frequency FES is input to a focus VCM, since an actuator cannot respond to the high frequency of the input FES. However, the actuator does respond to a low-frequency FES input to the focus VCM and results in the occurrence of a defocusing condition under which a target track cannot be reached.

The above problem is described with reference to Figures 5(B) to 5(E). FIG.5(B) shows the swing of a disk surface during a seek operation, and FIG.5(C) shows the position of a lens, that is, the movement of the lens in the focusing direction during the seek operation. The movement of the lens follows the swing of the disk surface during a period of high seek velocity, but during a period of low seek velocity the movement of the lens is unable to follow the swing of disk surface due to the effect of scattering based on the track groove, as shown above. Thus a defocusing condition occurs during low seek velocity, as shown in FIG.5(D). FIG.5(E) shows a TES obtained during a seek operation. The TES has a constant amplitude during a period of high seek velocity, but has a low amplitude when defocusing occurs during a period of low seek velocity. Since the seek operation is controlled by positional information provided by the TES, the seek operation becomes out of control if the amplitude of the TES becomes low, and a target track cannot be reached.

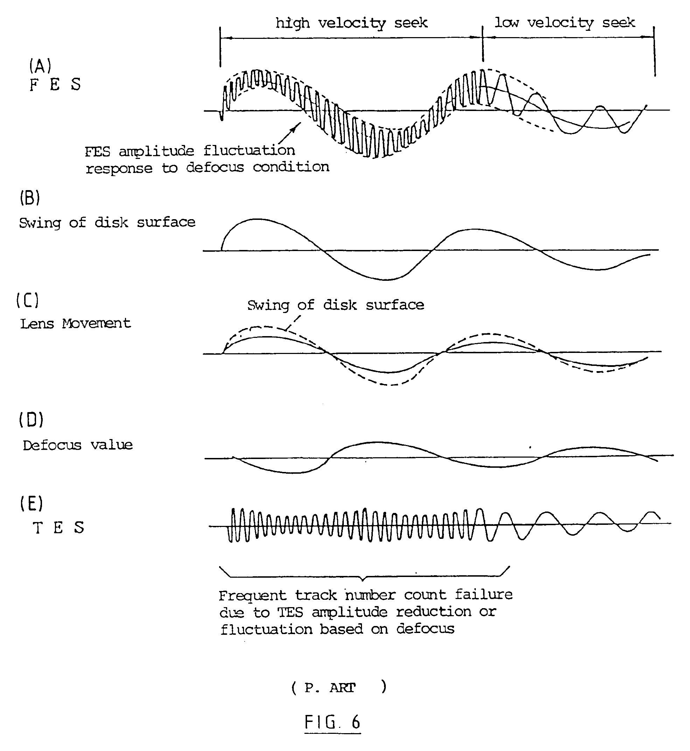

In Japanese Published Unexamined Patent Application (kokai) No.57-186239, taken into account for the delimitation of the appended claim 1, means are disclosed for lowering the control gain of focusing means during a seek operation to avoid occurrence of a tone noise from a pickup. However, this prior art does not disclose the solution of the forementioned problem. FIG.6(A) to FIG.6(E) relate to FIG.5(A) to FIG.5(E), but show values obtained when the control gain is lowered. In this situation, a driving force large enough to enable the lens to follow the swing of the disk surface cannot be obtained since the control gain of the focusing means is also lowered during a seek operation of high velocity, and thus the amplitude of the waveform of the lens elevation shown in FIG.6(C) becomes small relative to the amplitude of the waveform of the swing of the disk surface shown in FIG.6(B). As shown in FIG.6(B), the amplitude of the waveform showing the swing of the disk surface decreases as the seek operation varies from a high velocity to a low velocity, because the influence of mechanical tolerances included in the mechanical elements such as a coarse actuator, fine actuator, etc. increases in high seek velocity. Unstable amplitudes of the FES shown in FIG.6(A) indicate that a defocusing condition occurs as shown in FIG.6(D) and the amplitudes of the FES decrease according to the defocusing condition. As shown in FIG.6(E), such defocusing conditions cause the TES to vary, track count errors to occur frequently, and the seek operation to be out of control.

An object of this invention is to provide a TES of proper amplitude regardless of the seek velocity in order to properly perform the control of a seek operation.

Accordingly the present invention provides an optical disk drive apparatus having a laser for projecting a laser beam onto an optical disk, tracking means for controlling a projecting position of said laser beam to follow the track or tracks on said optical disk, focusing means responsive to errors in focusing of the laser beam on the track for controlling the projection of said laser beam so that said laser beam is focused on the recording surface of said optical disk, and information recovery means for recovering recorded data based on a reflected beam from said optical disk or a transmitted beam through said optical disk, said apparatus being characterised by: a gain controller for adjusting the sensitivity of said focusing means in response to a seek velocity at which said projecting position of said laser beam crosses said tracks of said optical disk, whereby the gain of the focusing means is reduced during the low velocity period of the seek operation.

This invention thus permits the sensitivity of the focusing means to be controlled in response to a seek velocity of an optical head, wherein if the seek velocity is high, the sensitivity of the focusing means remains unchanged to enable enough driving force to be applied by a focus VCM to make the movement of the lens respond to the swing of the disk surface, whilst, on the other hand, if the seek velocity is low, the effect of beam scattering on a track groove upon the FES and the TES is lessened by decreasing the gain of the focusing means.

In preferred embodiments the gain controller adjusts the sensitivity of said focusing means by controlling a focus servo loop within said focusing means, the gain controller decreasing the gain of the focus servo loop at a time when the seek operation of an optical head is nearly completed. This is done since a seek velocity is usually reduced as the seek operation nears completion. By this approach it is possible to hold the control gain of the servo loop during high seek velocity periods so that enough driving force can be applied to a focus VCM to make the movement of a lens respond to the swing of the disk surface, and to reduce the effect of beam scattering upon a track groove on the FES and the TES by decreasing the control gain of the focusing means if a seek velocity becomes low at a time when the seek operation is nearly completed.

The present invention will be described further, by way of example only, with reference to an embodiment thereof as illustrated in the accompanying drawings in which:
FIG.1 is a block diagram showing a part of an embodiment of this invention applied to an optical disk drive apparatus;
FIG.2 is a perspective view showing another part of said embodiment;
FIG.3 is a graph showing a velocity profile of said embodiment;
FIG.4(A) to FIG.4(E) are charts showing waveforms of a FES, the swing of a disk surface, the movement of a lens, the quantity of defocus, and a TES respectively, in said embodiment;
FIG.5(A) to FIG.5(E) are charts showing waveforms of a FES, the swing of a disk surface, the movement of a lens, the quantity of defocus, and a TES respectively, in a conventional apparatus; and
FIG.6(A) to FIG.6(E) are charts showing waveforms of a FES, the swing of a disk surface, the movement of a lens, the quantity of defocus, and a TES respectively, in another conventional apparatus.

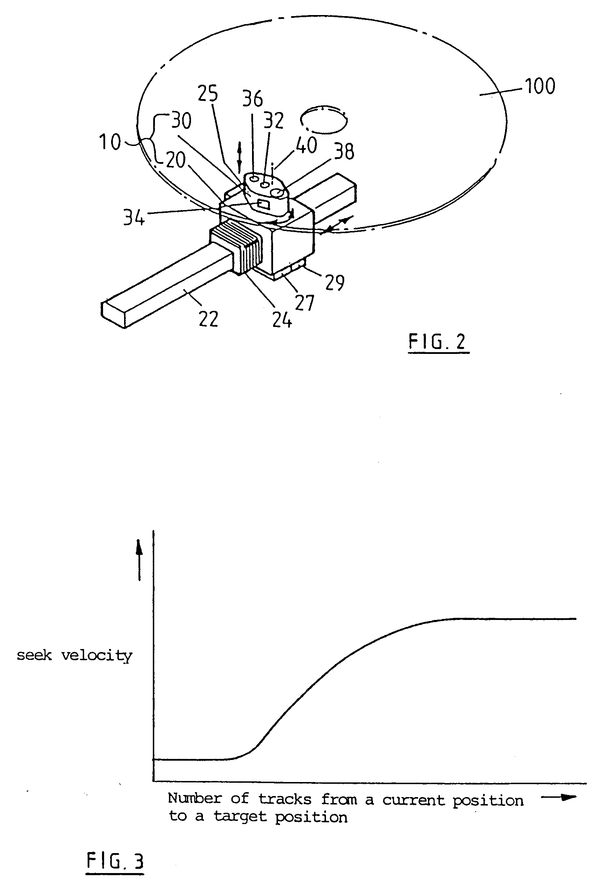

FIG.2 shows part of an optical disk drive apparatus in accordance with the preferred embodiment of the present invention. An optical head 10 is composed of a coarse actuator 20 and a fine actuator 30. The coarse actuator 20 is supported by a rail 22 so that it can move freely in the radius direction of an optical disk 100 (in the direction of a seek operation), and is driven in the direction of the seek operation by a coarse actuator VCM (Voice Coil Motor) 24.

The fine actuator 30 is supported by the coarse actuator 20 through a shaft 32 so that it can move in the focusing and tracking directions and is driven in the focusing direction and in the tracking direction by a focus VCM 34 and a tracking VCM 36 respectively. The fine actuator 30 has an objective lens 38 fixed from which a laser beam 40 is projected onto the optical disk 100.

Also, the coarse actuator 20 is provided with a relative position error (RPE) detecting sensor 25, a focus error signal (FES) detecting sensor 27, and a tracking error signal (TES) detecting sensor 29. The relative position error (RPE) detecting sensor 25, for example a split photo sensor with two sensitive parts detects the quantity of a relative deflection (rotational deflection from a neutral position) of the fine actuator 30 from the coarse actuator 20. The focus error signal (FES) detecting sensor 27, for example a split photo sensor with four sensitive parts, detects a positional difference of a spot of the laser beam 40 from a focusing point on the optical disk 100. The tracking error signal (TES) detecting sensor 29, for example a binary split photo sensor, detects a positional deviation of a spot of the laser beam 40 from the track center on the optical disk 100.

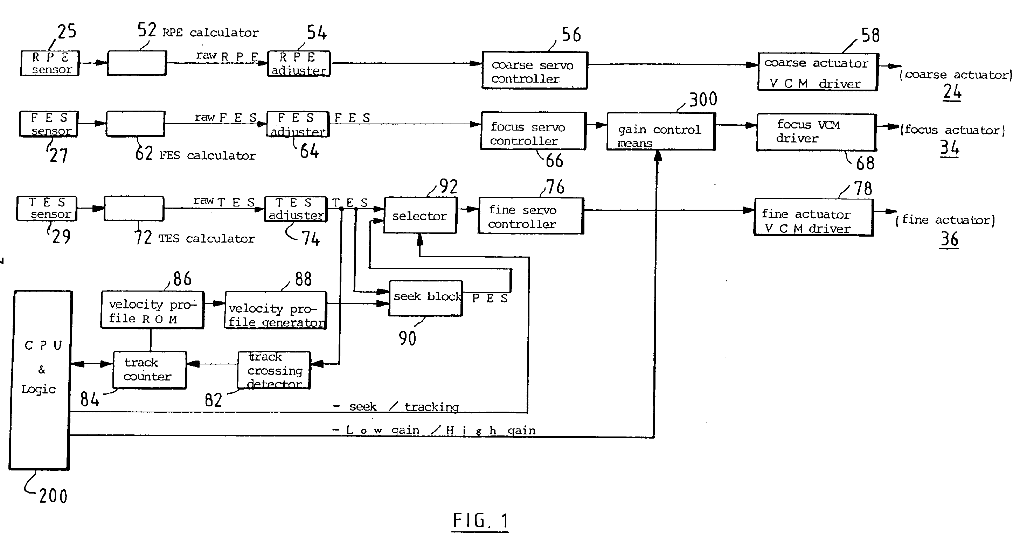

FIG.1 shows another part of the preferred embodiment. In the figure, an output from the relative position error (RPE) detecting sensor 25 is input to a RPE calculator 52. The RPE calculator 52, if the RPE detecting sensor 25 is, for example, a split photo sensor with two sensitive parts, calculates a difference between detected signals from the two photo-sensitive parts and then outputs an unadjusted or raw RPE. An RPE adjuster 54 is used to adjust the gain or offset of unadjusted RPE and the resultant adjusted RPE is then provided to a coarse servo controller 56.

The RPE, after low-pass filtering and compensation for phase progress by the coarse servo controller 56, is provided to a coarse actuator VCM driver 58 from which driving current according to the amplitude and the sign of the RPE, that is, the quantity and the direction of the deflection of the fine actuator 30 to the coarse actuator 20 is provided to the coarse actuator VCM 24.

An output from the FES detecting sensor 27 is input to a FES calculator 62. The FES calculator 62, for example, if the FES detecting sensor 27 is a split photo sensor with four sensitive parts, calculates a difference between a sum of detected signals from a pair of two photo sensitive parts positioned diagonally to each other and a sum of detected signals from the remaining pair of two photo-sensitive parts also positioned diagonally to each other, and then outputs an unadjusted FES. The offset of the unadjusted FES is then adjusted by a FES adjuster 64, and the resultant adjusted FES is provided to a focus servo controller 66.

The FES, after low-pass filtering and compensation for phase progress by the focus servo controller 66, through a gain control means 300, is provided to a focus VCM driver 68 from which driving current according to the amplitude and sign of the FES, that is, a positional deviation amplitude and a deviation direction of a spot of the laser beam 40 from the focus point, is provided to the focus VCM 34. Hereupon, the focus error signal (FES) detecting sensor 27, the FES calculator, the FES adjuster, the focus servo controller 66, and the gain control means 300 compose the focusing means.

An output from the TES detecting sensor 29 is input to a TES calculator 72. The TES calculator 72, for example, if the TES detecting sensor 29 is a split photo sensor with two sensitive parts, calculates a difference between detected signals from a pair of two photo sensitive parts to produce an unadjusted or raw TES. The gain and offset of the unadjusted TES are then adjusted by the TES adjuster 74 to form an adjusted TES and the TES thus obtained is provided to the fine servo controller 76, a fine actuator VCM driver 78 providing a driving signal which is provided to the tracking VCM 36.

The adjusted TES is also input to a track crossing detector 82 in which the number of times when the optical head 10 (that is, a beam spot) crosses the tracks is detected based on a waveform of the TES; the result of such detection is provided to a track counter 84. At the start of a seek operation, a servo system controller (CPU plus logic circuit) 200 provides a value to the track counter 84 indicating a track distance from a current position to a target position. A value contained in the track counter 84 is decreased by subtraction each time the optical head 10 crosses one track during the seek operation.

The controller 200 is provided with a velocity profile ROM 86 in which information, for example, the relation between a track distance from a current position to the target position and a desired velocity, as in FIG.3, used for controlling the seek velocity is stored. When information about the current position is provided based on the value of the track counter 84, the velocity profile ROM 86 outputs a desired velocity, represented as a digital value, at the current position to a velocity profile generator 88 in which the digital value is converted to an analog value which is output to a seek block 90. The seek block 90 compares the value obtained from the velocity profile generator 88 with the current velocity information conveyed by the TES to produce a positioning error signal (PES) which is an integrated value of the result of comparison. The PES is provided to a selector 92 to which the TES as well as the PES is provided. In seek operation mode, the selector 92 provides the PES to the fine servo controller 76, but in tracking operation mode, the selector 92 provides the TES to the fine servo controller 76. In seek operation mode, the selector 92 may provide PES to not only the fine servo controller 76 but the coarse servo controller 56.

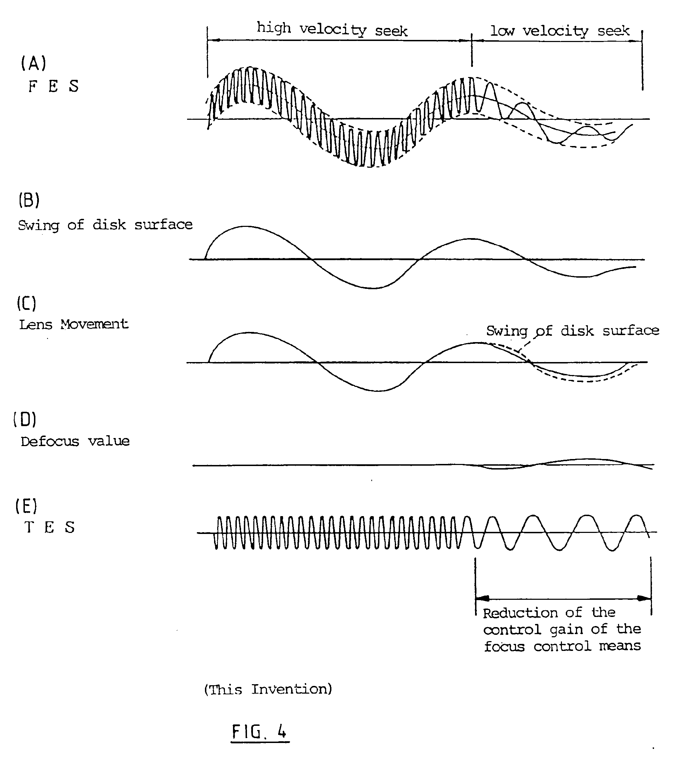

The seek operation of the preferred embodiment will now be described with reference to FIG.4(A) to FIG.4(E). At the start of seek operation, the number of tracks from a seek start position to a target position is stored in the track counter 84 and the stored value is decreased by subtraction each time the optical head crosses a track during the seek operation. A seek velocity is determined based on the value stored in the track counter 84 by reference to a velocity profile (FIG.3) in the velocity profile ROM 86. For a short time after the seek operation starts, as shown in the velocity profile (FIG.3), the seek operation is performed at a high velocity. During a period of such high-velocity seek operation the control gain of said focusing means is intended to remain the same as the value of a control gain during a period of a track following operation. If the controller 200 detects that the value contained in the track counter 84 has dropped to a predetermined value at a time when the seek operation is nearly completed, the controller 200 provides a control signal to the gain control means 300 to decrease the control gain of said focusing means to a predetermined value.

The control gain of the focusing means, thus varied, causes the effect of scattering due to a groove in track crossing conveyed by the FES to be reduced, as shown in FIG.4(A). Thus, the movement of the lens (FIG.4(C)) following the swing of disk surface (FIG.4(B)) is improved during the low-velocity seek operation to decrease the quantity of defocus (FIG.4(D)). As a result the amplitude of the TES is not decreased during the low-velocity seek operation and the proper TES required for controlling the seek operation can be obtained to perform the seek operation without disturbance, as shown in FIG.4(E).

The control gain of the focusing means in this embodiment is varied according to the value stored in the track counter 84, however it will be recognized that the control gain of the focusing means may be varied based on information relating to the seek velocity.

Also the control gain of the focusing means in this embodiment is varied either high or low, however it will be appreciated that the control gain of the focusing means may also be varied more than two stages or regardless of stages.

The components of high frequency in the FES produced during the high-velocity seek operation are not specially removed in this embodiment, however it will be appreciated also that said components of high frequency may be removed by the low-pass filter.

According to the preferred embodiment of the present invention, as described above, a proper TES can be obtained regardless of seek velocity to properly control a seek operation.

## Claims

1. An optical disk drive apparatus having a laser for projecting a laser beam onto an optical disk (100), tracking means (29,72-78) for controlling a projecting position of said laser beam to follow the track or tracks on said optical disk, focusing means (27,62-68) responsive to errors in focusing of the laser beam on the track for controlling the projection of said laser beam so that said laser beam is focused on the recording surface of said optical disk, and information recovery means for recovering recorded data based on a reflected beam from said optical disk or a transmitted beam through said optical disk, said apparatus being characterised by:
a gain controller (300) for adjusting the sensitivity of said focusing means in response to a seek velocity at which said projecting position of said laser beam crosses said tracks of said optical disk, whereby the gain of the focusing means is reduced during the low velocity period of the seek operation.

2. An optical disk drive apparatus as claimed in Claim 1 in which said focusing means includes a servo loop and said gain controller adjusts the sensitivity of said focusing means by decreasing the gain of a focus servo loop shortly before the completion of a seek operation of an optical head containing said laser.

3. An optical disk drive apparatus as claimed in Claim 1 or Claim 2 further comprising a velocity profile representing a relationship between a distance from a current position to a target position and said seek velocity, said seek velocity being determined by said distance and said velocity profile, and wherein said gain controller decreases the sensitivity of said focusing means at a time when said distance from a current position to a target position reaches a predetermined value.

4. An optical disk drive apparatus as claimed in any preceding claim, further including a track counter for keeping a record of the number of tracks from a current track to a target track.

## Patentansprüche

1. Eine optische Platteneinheit mit einem Laser zum Abstrahlen eines Laserstrahls auf eine optische Platte (100), Spurverfolgungsmittel (29, 72 - 78) zum Steuern der Projektionsstellung des Laserstrahls zum Verfolgen der Spur bzw. der Spuren auf der optischen Platte, Fokussiermittel (27, 62 - 68), die auf Fehler in der Fokussierung des Laserstrahls auf die Spur ansprechen, um die Projektion des Laserstrahls zu steuern, so daß der Laserstrahl auf die Aufzeichnungsfläche der optischen Platte fokussiert wird, und Informationsabrufmittel zum Abrufen der aufgezeichneten Daten auf der Grundlage eines von der optischen Platte reflektierten Strahls oder eines durch die optische Platte übertragenen Strahls, wobei das Gerät gekennzeichnet ist durch
eine Verstärkungs-Steuerung (300) zum Einstellen der Empfindlichkeit des Fokussiermittels als Reaktion auf eine Suchgeschwindigkeit, mit der die Projektionsposition des Laserstrahls die Spuren der optischen Platte überstreicht, wobei die Verstärkung des Fokussiermittels während der Periode der langsamen Geschwindigkeit der Suchoperation reduziert wird.

2. Eine optische Platteneinheit gemäß Anspruch 1, bei der das Fokussiermittel einen Servoregelkreis aufweist und die Verstärkungssteuerung die Empfindlichkeit des Fokussiermittels einstellt durch Verringern der Verstärkung eines Fokus-Servoregelkreises kurz vor Abschluß einer Suchoperation eines optischen Kopfes, der den Laser enthält.

3. Eine optische Platteneinheit gemäß Anspruch 1 oder 2, die ferner ein Geschwindigkeitsprofil aufweist, das ein Verhältnis zwischen einem Abstand von einer augenblicklichen Position zu einer Zielposition und der Suchgeschwindigkeit repräsentiert, wobei die Suchgeschwindigkeit durch den Abstand und das Geschwindigkeitsprofil bestimmt wird, und wobei die Verstärkungssteuerung die Empfindlichkeit des Fokussiermittels mindert, sobald der Abstand von der augenblicklichen Position zu einer Zielposition einen bestimmten vorgegebenen Wert erreicht.

4. Eine optische Platteneinheit gemäß einem beliebigen der vorstehenden Ansprüche, die ferner einen Spurenzähler beinhaltet, der laufend die Anzahl der Spuren verzeichnet, die zwischen einer augenblicklichen Spur und einer Zielspur gekreuzt werden.

## Revendications

1. Unité de disque optique ayant un laser servant à projeter un faisceau laser sur un disque optique (100), des dispositifs de recherche (29, 72-78) servant à commander la position de projection du dit faisceau laser pour suivre la ou les pistes situées sur le dit disque optique, des dispositifs de direction (27, 62-68), sensibles aux erreurs de positionnement du dit faisceau laser sur la piste, servant à commander la projection du dit faisceau laser de manière à ce que le dit faisceau laser soit dirigé sur la surface d'enregistrement du dit disque optique, et des dispositifs de récupération de l'information, pour récupérer les données enregistrées, basés sur un faisceau réfléchi par le dit disque optique ou sur un faisceau émis au-travers du dit disque optique, la dite unité étant caractérisée par :
une commande de niveau (300) servant à ajuster la sensibilité des dits dispositifs de direction en réponse à une vitesse de recherche à laquelle la dite position de projection du dit faisceau laser croise les dites pistes du dit disque optique, ce par quoi le niveau des dispositifs de direction est réduit pendant la période à faible vitesse de l'opération de recherche.

2. Unité de disque optique telle que revendiquée dans la revendication 1 dans laquelle les dits dispositifs de direction comprennent une boucle d' asservissement et la dite commande de niveau ajuste la sensibilité des dits dispositifs de direction en diminuant le niveau d'une boucle d' asservissement de direction peu avant l'achèvement de l'opération de recherche d'une tête optique contenant le dit laser.

3. Unité de disque optique telle que revendiquée dans la revendication 1 ou 2 comprenant en outre un profil de vitesse représentant une relation entre la distance séparant la position en cours d'une position cible et la dite vitesse de recherche, la dite vitesse de recherche étant déterminée par la dite distance et le dit profil de vitesse, et dans laquelle la dite commande de niveau diminue la sensibilité des dits dispositifs de direction au moment où la dite distance entre la position en cours et la position cible atteint une valeur prédéterminée.

4. Unité de disque optique telle que revendiquée dans l'une quelconque des revendications précédentes, incluant en outre un compteur de piste servant à garder un enregistrement du nombre de pistes séparant la piste en cours d'utilisation d'une piste cible.
